# FASCICULE DE BREVET EUROPEEN

(11) **EP 1 400 705 B1**
(45) Date de publication et mention de la délivrance du brevet: **23.05.2007**
(21) Numéro de dépôt: 03292301.3
(22) Date de dépôt: 18.09.2003
(51) Int. Cl.: F16B 19/02, F16B 5/07, F16B 21/08, F16B 4/00, F16M 7/00

(54) **Ensemble d'un doigt et d'un canon de fixation**
Befestigungseinheit aus Finger und Hülse
Fixing mean comprising finger and bushing

(30) Priorité: 19.09.2002 FR 0211608
(43) Date de publication de la demande: 24.03.2004
(73) Titulaire: SAGEM Défense Sécurité, 75015 Paris (FR)
(72) Inventeur: Decamp, Katell, 78240 Chambourcy (FR)
(74) Mandataire: Bloch, Gérard

(56) Documents cités:
- DE-A- 4 112 991
- DE-U- 29 505 535
- FR-A- 1 360 474
- US-A- 1 978 087
- US-A- 4 344 717
- US-A- 4 715 095
- US-A- 4 984 938

## Description

La présente invention concerne un ensemble d'un doigt et d'un canon d'une pièce et d'un support destinés à être emmanchés l'un dans l'autre pour la fixation de la pièce au support, le doigt comprenant une portion antérieure d'introduction avec jeu dans le canon et une partie postérieure de fixation.

Il est fréquent de maintenir un système sur un support à l'aide d'une pluralité de doigts s'emmanchant dans des canons prévus à cet effet. Par exemple les centrales inertielles sont munies de canons dans lesquels viennent s'emmancher les doigts d'un support, communément appelé rack. On nommera par la suite rack tout type de support susceptible de posséder des doigts de fixation, comme un râtelier, un chevalet, un casier, un châssis ... Le rack est solidaire de l'engin, par exemple un avion, équipé de la centrale, ce qui permet à la centrale d'être soumise aux mêmes mouvements que l'engin, la centrale étant verrouillée en translation sur les doigts par un système de verrouillage indépendant des doigts.

Le problème à l'origine de la présente invention concerne une centrale inertielle, mais il va de soi que la demanderesse n'entend pas par là limiter la portée de sa demande à ce domaine, cette dernière devant s'étendre à tout ensemble d'un doigt et d'un canon.

Dans le cas des centrales, il est en général prévu trois doigts, un à l'avant et deux à l'arrière du rack. Lors du montage de la centrale sur le rack, les trois doigts sont insérés simultanément dans leurs canons respectifs sur la centrale. Afin de permettre cette insertion, il est prévu un jeu entre les doigts et leurs canons correspondants, assuré en général par une portion antérieure d'introduction conique des doigts, à l'avant d'une portion postérieure cylindrique. Le diamètre de la portion postérieure cylindrique des doigts est inférieur à celui des canons. Ce jeu permet de compenser les tolérances de fabrication et d'adapter les doigts dans leur canon, puisqu'il est pratiquement impossible de rendre coaxiaux les trois ensembles doigt-canon respectivement simultanément. Le jeu facilite en outre le montage et le démontage de la centrale, donc l'interchangeabilité des centrales.

Toutefois, le jeu pose problème par rapport à la précision de la centrale. En effet, la centrale étant soumise à des vibrations, le jeu permet un mouvement relatif entre la centrale et le rack, donc entre la centrale et l'avion, ce qui fausse les mesures. En outre, il y a dans la centrale des senseurs inertiels qui mesurent en temps réel des données d'accélération et de rotation, qui sont ensuite compilées dans un modèle mathématique afin d'en déduire la position de l'avion dans l'espace. Ces modèles doivent être calibrés, c'est-à-dire qu'on détermine expérimentalement leurs paramètres. Or le jeu n'étant pas prévisible d'une centrale à l'autre, il est impossible de prévoir son influence sur le modèle, ce qui entraîne un manque de précision dans les calculs. Il a été calculé qu'avec une centrale fixée sur le rack, sans jeu, les erreurs seraient trois à quatre fois moindres.

La présente invention vise à pallier ces inconvénients.

A cet effet la présente invention concerne un ensemble selon la revendication 1.

Grâce à l'invention, la pièce peut être facilement montée et démontée du support sans que la fixation de la pièce n'en soit affectée.

Le document DE-U-295 05 535 divulgue un ensemble d'un doigt et d'un canon d'une pièce et d'un support destinés à être emmanchés l'un dans l'autre pour la fixation de la pièce au support, le doigt comprenant une portion antérieure d'introduction dans le canon et une partie postérieure de fixation.

Le document US-A- 4, 715, 095 concerne un doigt de fixation de deux plaques écartées l'une de l'autre, la portion postérieure du doigt étant agencée pour fléchir lors du passage dans le trou avant de reprendre sa forme initiale de sorte à pincer la plaque du côté aval du trou.

Dans la forme de réalisation préférée de l'invention, le diamètre de la portion postérieure du doigt est plus grand que le diamètre du canon et il est prévu une fente dans le doigt.

Avantageusement, il est prévu des méplats latéraux sur le doigt.

De préférence encore, la portion postérieure de fixation comprend une partie ne compensant pas le jeu.

De préférence encore, la portion postérieure de fixation comprend une partie cylindrique et une partie arrière tronconique à l'arrière de la partie cylindrique.

Avantageusement, le doigt est revêtu d'un dépôt de graphite.

L'invention sera mieux comprise à l'aide de la description suivante de la forme de réalisation préférée de l'invention, en référence au dessin annexé, sur lequel :
- la figure 1 représente une vue de profil de l'ensemble conforme à la présente invention ;
- la figure 2 représente une vue en bout du doigt de l'ensemble de la figure 1 et
- la figure 3 représente une vue éclatée de l'assemblage d'une centrale inertielle sur un rack, avec des ensembles selon les figures 1 et 2.

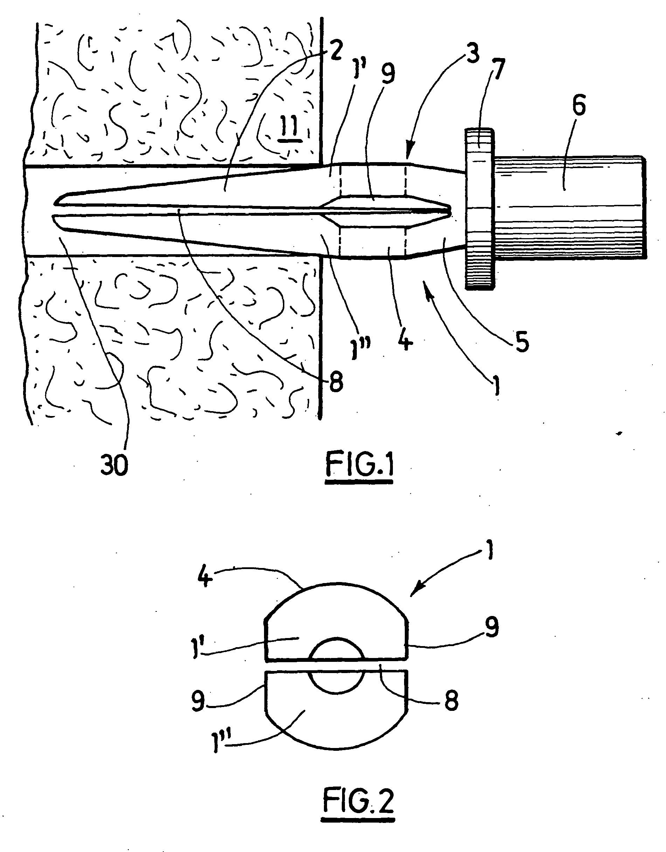

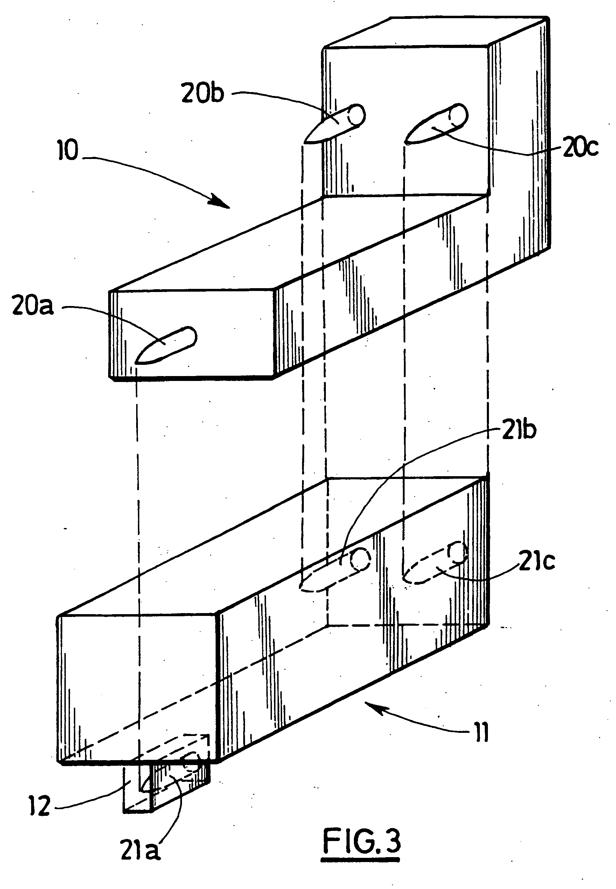

En référence aux figures 1 et 2, le doigt 1 de l'ensemble de l'invention comprend une portion antérieure d'introduction 2, de forme tronconique, et une portion postérieure de fixation 3, qui comporte elle-même une partie cylindrique 4 et une partie postérieure tronconique 5, l'ouverture du cône de la partie postérieure tronconique 5 étant inversée par rapport à celle de la portion antérieure 2. Le doigt 1 possède en outre une portion 6 d'emmanchement dans un rack 10 (figure 3) et une butée 7, ces deux éléments coopérant à la fixation du doigt 1 sur le rack 10. Il est pratiqué sur le doigt 1 une fente 8 longitudinale et ici axiale, sur toute la largeur du doigt 1 et au moins jusqu'au début de la partie postérieure tronconique 5. Sur la partie cylindrique 4, ainsi que sur une partie de la portion antérieure d'introduction 2 et de la partie postérieure tronconique 5, adjacentes à la partie cylindrique 4, il est pratiqué deux méplats latéraux diamétralement opposés 9. Le doigt 1 est agencé pour s'emmancher dans un canon 30 d'une centrale inertielle 11. Le diamètre de la partie cylindrique 4 est supérieur à celui du canon 30.

En référence à la figure 3, le rack 10 comprend trois doigts 20a, 20b, 20c qui pointent dans la même direction dans le plan horizontal, deux doigts 20b, 20c se trouvant dans le même plan vertical, à l'arrière du rack 10 , et le troisième 20a à l'avant du rack, dans un plan horizontal différent de celui contenant les deux autres doigts 20b, 20c. La centrale inertielle 11 comporte trois canons 21a, 21b, 21c, de forme creuse cylindrique sur au moins une portion d'introduction. Deux des canons 21b, 21c se trouvent dans le même plan vertical; le troisième canon 21 a se trouve, à l'avant, dans un plan horizontal différent de celui contenant les deux autres canons 21b, 21c, dans une pièce 12 rapportée sur la centrale 11. La centrale inertielle 11 est fixée sur le rack 10 ; à cet effet, les doigts 20a, 20b, 20c sont emmanchés dans les canons 21 a, 21 b, 21 c, respectivement ; un système de verrouillage dans la direction des doigts est également prévu, mais n'est pas représenté ici, étant bien connu de l'homme du métier.

Décrivons maintenant le comportement de l'ensemble canon-doigt de la présente invention lors de la fixation de la centrale inertielle 11 sur le rack 10. Dans la description qui suit, lorsqu'il sera fait allusion au doigt 1 ou au canon 30, on comprendra qu'il s'agit du comportement de n'importe lequel des doigts 20a, 20b, 20c ou des canons 21a, 21b, 21c, respectivement. En outre, les diverses portions et parties du doigt 1 sont les mêmes pour tous les doigts 20a, 20b, 20c.

Au début de l'insertion de la centrale inertielle 11 sur le rack 10, il est possible de positionner et de commencer à insérer sans problème les doigts 20a, 20b, 20c grâce à leur portion antérieure d'introduction 2 de forme conique. Il n'est pas par conséquent nécessaire de placer les doigts 20a, 20b, 20c par rapport aux canons 21a, 21b, 21c de façon extrêmement précise.

La fin de la portion antérieure d'introduction 2 a le même diamètre que la partie cylindrique 4 du doigt 1, donc un diamètre supérieur à celui du canon 30. Ainsi au cours de l'insertion, et avant d'atteindre la fin de la portion antérieure d'introduction 2 , le doigt 1 vient en appui sur le bord du canon 30, comme on le voit sur la figure 1. Si l'on continue l'insertion, en force, cela a pour effet de faire fléchir les deux demi-portions 1', 1" du doigt 1 de part et d'autre de la fente 8, dans l'espace de la fente 8, et donc de continuer l'insertion du doigt 1. Il est donc possible d'introduire la partie cylindrique 4 du doigt 1 grâce au fléchissement de ses deux demi-portions 1', 1".

Le fléchissement se fait dans la direction perpendiculaire, dans une vue en coupe transversale, donc par exemple sur la figure 2, à la fente 8. On adapte ainsi le diamètre du doigt 1 à celui du canon 30. Toutefois, dans la direction de la fente 8, toujours dans une vue en coupe transversale, il n'y a pas de fléchissement, d'où la nécessité des méplats 9, qui permettent au diamètre du doigt 1 d'être, dans cette direction, inférieur à celui du canon 30, et permettent donc au doigt 1 de pénétrer dans le canon 30. Lesdits méplats 9 sont présent dans toute la zone du doigt 1 dont le diamètre est supérieur à celui du canon 30. Ces types de méplat 9 sont bien connus et reproductibles pas l'homme du métier.

En fin d'insertion, en raison de sa forme conique, l'effort exercé par le doigt 1 sur le canon 30 de la centrale 11 ne varie plus. L'intérêt de cette partie postérieure tronconique 5 est donc de stabiliser l'effort entre le doigt 1 et le canon 30 en fin d'insertion.

Le doigt 1 est donc finalement ancré dans le canon 30, en raison de la force qu'il exerce sur le canon 30, force due au fléchissement des deux demi-portions élastiques 1', 1". Il n'y a plus de jeu entre les doigts 20a, 20b, 20c et les canons 21a, 21b, 21c. Le fléchissement forcé des doigts 20a, 20b, 20c a permis de compenser les tolérances de fabrication.

Une résonance des systèmes doigt-canon est bien sûr envisageable. Toutefois, si elle se produit, ce sera à une fréquence inférieure à 2000 Hz, ce qui n'altère pas le travail des senseurs de la centrale inertielle 11.

Avantageusement, par un traitement de graphitage, il sera appliqué un dépôt de graphite sur les doigts 20a, 20b, 20c, afin non seulement de faciliter la pénétration des doigts 20a, 20b, 20c dans les canons 21 a, 21 b, 21 c, mais également de réduire la corrosion.

On peut envisager la présence de plusieurs fentes dans le doigt 1, par exemple deux fentes perpendiculaires, ou trois fentes en étoile, ...

On a décrit ci-dessus une centrale inertielle 11 à fixer sur un rack 10 par des doigts 20a, 20b, 20c, sur le rack 10, et des canons 21a, 21b, 21c sur la centrale 11. Naturellement l'implantation des doigts 20a, 20b, 20c et des canons 21a,21b, 21c pourrait être inversée avec les doigts 20a, 20b, 20c sur la pièce, la centrale 11, destinée à être fixée sur le support, le rack 10.

## Revendications

1. Ensemble d'un doigt (1) et d'un canon (30) d'une pluralité de doigts (20a, 20b, 20c) et d'une pluralité de canons (21a, 21b, 21c) d'une pièce (11) et d'un support (10), les doigts (20a, 20b, 20c) étant destinés à être simultanément emmanchés, avec jeu, dans les canons (21a, 21b, 21c) pour la fixation de la pièce (11) au support (10), le doigt (1) de l'ensemble comprenant une portion antérieure (2) d'introduction avec jeu dans le canon (30) de l'ensemble et une partie postérieure de fixation (3), **caractérisé par le fait que** la partie postérieure (3) du doigt (1) de l'ensemble est agencée pour compenser le jeu.

2. Ensemble selon la revendication 1, dans lequel le diamètre de la partie postérieure de fixation (3) du doigt (1) est plus grand que le diamètre du canon (30) et il est prévu une fente (8) dans le doigt (1).

3. Ensemble selon l'une des revendications 1 et 2, dans lequel il est prévu des méplats latéraux (9) sur le doigt (1).

4. Ensemble selon l'une des revendications 1 à 3, dans lequel la portion postérieure de fixation (3) comprend une partie cylindrique (4).

5. Ensemble selon l'une des revendications 1 à 4, dans lequel la portion postérieure de fixation (3) comprend une partie (5) ne compensant pas le jeu.

6. Ensemble selon la revendication 5, dans lequel la partie (5) ne compensant pas le jeu est tronconique et disposée à l'arrière de la partie cylindrique (4).

7. Ensemble selon l'une des revendications 1 à 6, dans lequel le doigt (1) est revêtu d'un dépôt de graphite.

8. Ensemble selon l'une des revendications 1 à 7, destiné à assurer la fixation d'une centrale inertielle (11) à un rack (10).

## Claims

1. Finger (1) and bushing (30) assembly of a plurality of fingers (20a, 20b, 20c) and a plurality of bushes (21a, 21b, 21c) of a part (11) and of a support (10), the fingers (20a, 20b, 20c) being intended to be fitted simultaneously, with clearance, into the bushes (21a, 21b, 21c) in order to fix the part (11) to the support (10), the finger (1) of the assembly comprising a front portion (2) for introduction with clearance into the bush (30) of the assembly and a rear fixing part (3), **characterised in that** the rear part (3) of the finger (1) of the assembly is designed to compensate for the clearance.

2. Assembly according to claim 1, in which the diameter of the rear fixing part (3) of the finger (1) is greater than the diameter of the bush (30) and a slot (8) is provided in the finger (1).

3. Assembly according to one of the claims 1 and 2, in which lateral flattenings (9) are provided on the finger (1).

4. Assembly according to one of the claims 1 to 3, in which the rear fixing portion (3) comprises a cylindrical part (4).

5. Assembly according to one of the claims 1 to 4, in which the rear fixing portion (3) comprises a part (5) which does not compensate for the clearance.

6. Assembly according to claim 5, in which the part (5) which does not compensate for the clearance is truncated and is disposed at the rear of the cylindrical part (4).

7. Assembly according to one of the claims 1 to 6, in which the finger (3) is overlaid with a graphite deposit.

8. Assembly according to one of the claims 1 to 7, intended to ensure fixing of an inertial unit (11) to a rack (10).

## Patentansprüche

1. Einheit aus einem Zapfen (1) und einer Buchse (30) von einer Vielzahl von Zapfen (20a, 20b, 20c) und einer Vielzahl von Buchsen (21a, 21b, 21c) eines Teils (11) und eines Trägers (10), wobei die Zapfen (20a, 20b, 20c) dazu bestimmt sind, in die Buchsen (21a, 21b, 21c) zur Befestigung des Teils (11) an dem Träger (10) mit Spiel gleichzeitig eingesteckt zu werden, wobei der Zapfen (1) der Einheit einen vorderen Abschnitt (2) zur Einführung in die Buchse (30) der Einheit mit Spiel und einen hinteren Befestigungsteil (3) umfasst, **dadurch gekennzeichnet, dass** der hintere Teil (3) des Zapfens (1) der Einheit zum Ausgleichen des Spiels ausgebildet ist.

2. Einheit nach Anspruch 1, bei der der Durchmesser des hinteren Befestigungsteils (3) des Zapfens (1) größer als der Durchmesser der Buchse (30) ist und in dem Zapfen (1) ein Schlitz (8) vorgesehen ist.

3. Einheit nach einem der Ansprüche 1 und 2, bei der an dem Zapfen (1) seitliche Abflachungen (9) vorgesehen sind.

4. Einheit nach einem der Ansprüche 1 bis 3, bei der der hintere Befestigungsabschnitt (3) einen zylindrischen Teil (4) umfasst.

5. Einheit nach einem der Ansprüche 1 bis 4, bei der der hintere Befestigungsabschnitt (3) einen das Spiel nicht ausgleichenden Teil (5) umfasst.

6. Einheit nach Anspruch 5, bei der der das Spiel nicht ausgleichende Teil (5) kegelstumpfförmig und hinter dem zylindrischen Teil (4) angeordnet ist.

7. Einheit nach einem der Ansprüche 1 bis 6, bei der der Zapfen (1) mit einem Graphitbelag beschichtet ist.

8. Einheit nach einem der Ansprüche 1 bis 7, die dazu bestimmt ist die Befestigung einer Trägheitsplattform (11) an einem Rack (10) zu gewährleisten.
